(19) Europäisches Patentamt
European Patent Office
Office européen des brevets

(11) **EP 1 419 411 B1**

(12) **EUROPÄISCHE PATENTSCHRIFT**

(45) Veröffentlichungstag und Bekanntmachung des Hinweises auf die Patenterteilung:
**19.01.2005 Patentblatt 2005/03**

(21) Anmeldenummer: **01978397.6**

(22) Anmeldetag: **05.10.2001**

(51) Int Cl.$^7$: **G02B 26/10**, G02B 27/18

(86) Internationale Anmeldenummer:
**PCT/EP2001/011510**

(87) Internationale Veröffentlichungsnummer:
**WO 2003/032046 (17.04.2003 Gazette 2003/16)**

(54) **PROJEKTIONSVORRICHTUNG**

PROJECTION DEVICE

DISPOSITIF DE PROJECTION

(84) Benannte Vertragsstaaten:
**AT BE CH CY DE DK ES FI FR GB GR IE IT LI LU MC NL PT SE TR**

(43) Veröffentlichungstag der Anmeldung:
**19.05.2004 Patentblatt 2004/21**

(73) Patentinhaber: **Fraunhofer-Gesellschaft zur Förderung der angewandten Forschung e.V. 80686 München (DE)**

(72) Erfinder:
• **SCHENK, Harald**
  **01139 Dresden (DE)**
• **WOLTER, Alexander**
  **01099 Dresden (DE)**
• **SCHWARZENBERG, Markus**
  **01099 Dresden (DE)**

(74) Vertreter: **Schoppe, Fritz, Dipl.-Ing. et al Patentanwälte Schoppe, Zimmermann, Stöckeler & Zinkler,
Postfach 246
82043 Pullach bei München (DE)**

(56) Entgegenhaltungen:
US-A- 3 621 133     US-A- 6 147 822
US-B1- 6 285 489

• **SCHWEIZER S ET AL: "Two-dimensional thermally actuated optical microprojector" SENSORS AND ACTUATORS A, ELSEVIER SEQUOIA S.A., LAUSANNE, CH, Bd. 85, Nr. 1-3, 25. August 2000 (2000-08-25), Seiten 424-429, XP004214507 ISSN: 0924-4247 in der Anmeldung erwähnt**

**Beschreibung**

Die vorliegende Erfindung bezieht sich auf Projektionsvorrichtungen und insbesondere auf miniaturisierte Low-Cost-(Niedrig-Preis-) Lichtprojektoren, wie sie zur Darstellung von Bildern, Mustern, Schriftzeichen oder Symbolen oder zur Belichtung eines photoempfindlichen Materials verwendet werden.

Für die Projektion von Bildern werden entweder parallele Verfahren, wie es beispielsweise bei LCDs (LCD = liquid crystal display) oder bei Mikrospiegelarrays der Fall ist, oder scannende bzw. abtastende Verfahren eingesetzt, wie sie beispielsweise durch einen biaxial beweglichen oder zwei uniaxial bewegliche Spiegel realisiert werden. Bei den parallelen Verfahren sind nachteilhafterweise eine vergleichsweise große Substratfläche bei der Herstellung und ferner eine komplexe Testprozedur erforderlich. Beides resultiert in einem vergleichsweise hohen Preis für Projektoren des parallelen Typs, so daß parallel arbeitende Verfahren für einen low-cost-Projektionsapparat nicht in Frage kommen.

Bei den scannenden Verfahren umfassen die Projektoren einen oder zwei bewegliche Spiegel, die eine Ablenkung eines Lichtstrahls um zwei Ablenkachsen bzw. eine zweidimensionale Ablenkung des Lichtstrahls ermöglichen. Durch die Ablenkung wird ein durch den Lichtstrahl erzeugter Lichtpunkt auf dem Bildfeld bewegt, wobei währenddessen die Intensität des Lichtstrahls abhängig von dem augenblicklichen Projektionsort des Lichtpunktes auf dem Bildfeld moduliert wird.

Um einen hohen Miniaturisierungsgrad bei gleichzeitig geringen Herstellungskosten zu ermöglichen, werden bei den Projektoren des scannenden Typs mikromechanisch hergestellte, bewegliche Spiegel eingesetzt. Bei den bisherigen Systemen des scannenden Typs beruht die Projektion stets auf einer spalten- und zeilenhaften Darstellung des Bildes. Um diese spalten- und zeilenhafte Darstellung zu ermöglichen, ist bei diesen Systemen die Zeilenfrequenz, d.h. die Frequenz der Ablenkung des Lichtstrahls bzw. des Lichtpunktes in horizontaler Richtung, klein gegenüber der Spaltenfrequenz, d.h. der Frequenz der Ablenkung des Lichtstrahls entlang der vertikalen Richtung. Das Verhältnis dieser Frequenzen zueinander legt die Anzahl der auflösbaren Zeilen fest und kann nur durch ein sogenanntes Interlace-Verfahren erhöht werden, bei dem abwechselnd zunächst alle geradzahligen Zeilen und dann alle ungeradzahligen Zeilen eines Bildes abgetastet bzw. dargestellt werden..

Bei mikromechanisch gefertigten scannenden Projektoren bzw. Scannern stellt das Erreichen von niedrigen Eigenfrequenzen bzw. Resonanzfrequenzen ein prinzipielles Problem dar, da mit der Eigenfrequenz die mechanische Stabilität des Systems sinkt. Wenn die vertikale Auslenkung in Resonanz bzw. resonant erregt werden soll, müssen der bzw. die Ablenkspiegel daher mit einer entsprechend noch größeren horizontalen Frequenz betrieben werden. Alternativ muß die vertikale Auslenkung im quasi statischen Betrieb durchgeführt werden, um die horizontale Auslenkung resonant erzeugen zu können. In dem Fall einer resonanten vertikalen Zeilenauslenkung des Lichtstrahls besteht ein Problem darin, daß die horizontale Spaltenfrequenz groß gegenüber einer ohnehin großen resonanten Zeilenfrequenz sein muß. Die dabei auftretenden großen horizontalen Ablenkfrequenzen rufen dynamische Deformationen der Spiegelplatte hervor, was zu Auflösungsproblemen bei der Projektion führt. Im Fall der quasi statischen vertikalen Zeilenauslenkung sind sehr hohe Betriebsleistungen erforderlich, die eine Miniaturisierung der Ansteuerung der Ablenkeinheit bzw. der Spiegel unmöglich oder die Ablenkeinheit sehr teuer machen. Diese Probleme können auch nicht durch Verringerung beider Frequenzen beseitigt werden, da die Zeilenfrequenz bzw. vertikale Frequenz die Bildwiederholfrequenz bestimmt, und eine zu niedrige Bildwiederholfrequenz zu einem Flackern des Bildes führt.

In Hagelin, P.M., Solgaard, O.: "Optical Raster-Scanning Displays Based on Surface Micromachined Polysilicon Mirrors", IEEE J. Selected Topics in Quantum Elecr., Band 5, Nr. 1 (1999), S. 67-74 sowie in den Artikeln Hagelin, P. usw.: "Micromachined Mirrors in a Raster Scanning Display System", Broadband Optical Networks and Technologies: an emerging reality, IEEE/LEOS summer topical meeting (1998), S. 109-110, S. 109-110 und Conant, R. usw.: "A rasterscanning fill motion video display using polysilicon micromacined mirrors", Transducers '99, Int. Conf. Solid-State Sensors and Actuators, Sendai (1999), S. 376-379, wird ein Projektionsapparat beschrieben, der auf der Verwendung von zwei elektrostatisch angeregten mikromechanischen, beweglichen Spiegeln beruht. Die niederfrequente Zeilenablenkung in vertikaler Richtung wird durch einen quasi statisch ausgelenkten Spiegel erzielt, während die hochfrequente horizontale Spaltenablenkung durch einen in Resonanz erregten Spiegel erhalten wird. Das Frequenzverhältnis beträgt 6,2 kHz : 20 Hz. Durch das Frequenzverhältnis wird die Anzahl der darstellbaren Zeilen auf 310 beschränkt. Die Bildwiederholrate beträgt entsprechend der Zeilenfrequenz 20 Hz. Nachteilhaft an diesem Projektionsapparat ist, daß die Bildwiederholrate derart gering ist, daß das projizierte Bild als flackernd wahrgenommen wird. Zudem weist der hochfrequent betriebene Spiegel dynamische Deformationen auf, welche zu signifikanten Auflösungsbegrenzungen, insbesondere am Bildrand, führen. Die Vergrößerung der Bildwiederholrate bei konstanter Anzahl der Zeilen oder eine Erhöhung der Zeilenanzahl, wie sie durch eine Vergrößerung der Frequenz des hochfrequenten Spiegels erreicht werden könnten, ist aufgrund der auftretenden dynamischen Deformationen nicht sinnvoll, oder führt zu nicht tolerierbaren Bildfehlern.

In Urey, H.; Wine, D.; T.; Osborn; "Optical Performance requirements for MEMS-scanner based microdisplays", Proc. SPIE Band 4178 (2000), S. 176-185, und Wine, D. usw.: "Performance of a biaxial MEMS-based Scanner for Microdisplays Applications", Proc. SPIE Bd. 4178 (2000), S. 186-196, wird ein Projektionsapparat beschrieben, der auf der Verwendung eines zweiachsig aufgehängten Spiegels beruht. Die niederfrequente vertikale Ablenkung wird quasi statisch durchgeführt, während die hochfrequente horizontale Ablenkung resonant erzeugt wird. Die vertikale Ablenkfrequenz beträgt etwa 55 Hz. Die horizontale Ablenkfrequenz ist auf 18 kHz eingestellt worden, um eine Zeilenanzahl von etwa 350 zu erzielen. Bei dieser hohen horizontalen Ablenk- bzw. Spaltenfrequenz ist die dynamische Deformation.der Spiegelplatte derartig groß, daß insbesondere am Randbereich des Bildes deutliche Auflösungsverschlechterungen auftreten.

In Schweizer, S. usw.: "Thermally actuated microprojector for optical display applications", Proc. SPIE Bd. 4178 (2000), S. 165-175, wird ein Projektionsapparat beschrieben, der auf der Verwendung eines Spiegels beruht, der gleichzeitig zu zwei Schwingungen angeregt werden kann, wobei die Schwingungsachsen zueinander senkrecht stehen. Die niederfrequente vertikale Ablenkung wird durch eine quasi statische Auslenkung des Spiegels erreicht, während die hochfrequente horizontale Ablenkung in Resonanz durchgeführt wird. Die Bildwiederholrate beträgt 50 Hz. Die Anzahl der auflösbaren Zeilen ist durch die vertikale Frequenz von 5 kHz auf 100 Zeilen beschränkt. Im Randbereich ist die Bildqualität aufgrund der dynamischen Deformation geringer als in der Bildmitte.

Die Aufgabe der vorliegenden Erfindung besteht darin, eine Projektionsvorrichtung zu schaffen, die eine bessere Bildqualität und/oder einen unaufwendigeren Aufbau aufweist.

Diese Aufgabe wird durch eine Projektionsvorrichtung gemäß Anspruch 1 gelöst.

Der vorliegenden Erfindung liegt die Erkenntnis zugrunde, daß von der bisherigen spalten- und zeilenhaften Darstellung bei der scannenden Bildprojektion abgegangen werden muß, um es zu ermöglichen, daß das Verhältnis zwischen Zeilen- und Spaltenfrequenz bzw. vertikaler und horizontaler Ablenkfrequenz nicht kritisch ist und verringert werden kann. Dies ist insbesondere für mikromechanische Ablenkspiegel ein deutlicher Vorteil. Auf diese Weise wird es ermöglicht, sowohl die Zeilen- als auch die Spaltenfrequenz auf Frequenzen in der Nähe der Eigen- bzw. Resonanzfrequenz der Ablenkeinrichtung, wie z.B. eines biaxial aufgehängten oder zweier uniaxial aufgehängter Spiegel, einzustellen, so daß dieselben einerseits klein genug sein.können, so daß die dynamische Deformation eines Ablenksiegels die Bildqualität nicht beeinträchtigt, und andererseits groß genug, so daß eine ausreichende mechanische Stabilität gewährleistet ist. Aufgrund dieser geringeren Anforderungen an das Verhältnis der beiden Ablenkfrequenzen wird bei Verwendung von Spiegeln eine dynamische Deformation einer Spiegelplatte, wie sie bei den Projektoren mit spalten- und zeilenweisem Bildaufbau auftreten, vermieden. Andererseits ist kein langsamer, quasistatischer Betrieb in einer der Ablenkrichtungen erforderlich, so daß die Betriebsleistung verringert, die Ansteuerung des bzw. der Spiegel miniaturisiert und die Ablenkeinrichtung allgemein unaufwendiger gemacht werden kann.

Eine erfindungsgemäße Projektionsvorrichtung zum Projizieren eines Bildes auf ein Bildfeld umfaßt eine Ablenkeinrichtung zum Ablenken eines Lichtstrahls um eine erste Ablenkachse mit einer ersten Ablenkfrequenz und um eine zweite Ablenkachse mit einer zweiten, von der ersten verschiedenen, Ablenkfrequenz, um den Lichtstrahl über das Bildfeld zu bewegen, sowie eine Modulationseinrichtung zum Modulieren einer Intensität des Lichtstrahls abhängig von dem zu projizierenden Bild. Die erste und die zweiten Ablenkfrequenz unterscheiden sich um weniger als eine Größenordnung voneinander, bzw. das Verhältnis $f_>/f_<$ zwischen der größeren Ablenkfrequenz $f_>$ und der kleineren Ablenkfrequenz $f_<$ ist kleiner zehn ($f_>/f_< < 10$). Eine spalten- und zeilenweise Darstellung wird hierdurch vermieden.

Gemäß einem speziellen Ausführungsbeispiel besteht die Ablenkeinrichtung aus einem biaxial aufgehängten Spiegel oder zwei uniaxial aufgehängten Spiegeln, der bzw. die zwei Ablenkachsen aufweisen, um eine zweidimensionale Ablenkung des Lichtstrahls zu ermöglichen. Die Ablenkung des Lichtstrahls um die Ablenkachsen erfolgt mit zwei Ablenkfrequenzen, die sich um weniger als eine Größenordnung unterscheiden. Die Frequenzen der Ablenkung sowohl um die eine als auch um die andere Ablenkachse können in der Nähe der Resonanzfrequenzen bezüglich der beiden Achsen liegen. Da sich die Ablenkfrequenzen nur geringfügig unterscheiden, wird das Bild nicht spalten- und zeilenförmig erzeugt. Die beiden Ablenkfrequenzen werden derart eingestellt, daß sie einen größten gemeinsamen Teiler aufweisen. Auf diese Weise wiederholt sich die Bewegung des Lichtstrahls bzw. die Bewegung des Lichtpunktes, den der Lichtstrahl auf dem Bildfeld, wie z.B. einer Bildeben, erzeugt, mit einer Bildwiederholrate, die dem größten gemeinsamen Teiler der beiden Ablenkfrequenzen entspricht. Mit derart eingestellten Ablenkfrequenzen kann der Weg, den der Lichtstrahl auf dem Bildfeld beschreibt, im wesentlichen als eine Lissajous-Figur beschrieben werden. Während der Lichtstrahl bzw. der Lichtpunkt mittels der gering abweichenden Ablenkfrequenzen bewegt wird, wird die Intensität des Lichtstrahl modelliert, um an den momentanen Projektionsorten Lichtpunkte gewünschter Helligkeit zu erzeugen. Zur Modulation der Intensität des Lichtstrahls bzw. des durch denselben auf dem Bildfeld erzeugten Lichtpunktes werden die das Bild beschreibenden Bilddaten geeignet aufbereitet, wie z.B. durch Ändern der Reihenfolge eines Eingangsdatenstroms von Pixelwerten der Bilddaten und Ausgeben derselben in geänderter Reihenfolge, durch Interpolieren des Bildes an Orten, die dem Verlauf des Lichtpunktes entsprechen, die der Lichtpunkt auf dem Bildfeld beschreibt, oder durch Einstellen der Lichtstrahlintensität gemäß demjenigen Pixel eines zu projizierenden Bitmaps bzw. Pixelarrays, in dessen zugeordneten Bildfeldbereich sich der momentane Projektionsort des Lichtstrahl auf dem Bildfeld befindet. In dem Fall des gebrochenrationalen Verhältnisses zwischen den beiden Ablenkfrequenzen ist die Aufbereitung der Bilddaten lediglich einmal pro Bild erforderlich, so daß der Berechnungsaufwand hierfür gering gehalten werden kann.

Ein weiterer Vorteil der vorliegenden Erfindung besteht darin, daß im Gegensatz zu den Interlace-Verfahren bei einigen herkömmlichen scannenden, das Bild spalten- und zeilenweise abtastenden Verfahren, wie es beispielsweise in Kays, R.: "Eidophor-Projektor für erhöhte Bildqualität", Fernseh- und Kinotechnik, 39. Jahrgang, Nr. 5 (1985), S. 231-234, beschrieben ist, kein Wackeln des Bildes in vertikaler Richtung aufgrund der abwechselnden Darstellung von geradzahligen und ungeradzahligen Zeilen auftritt, da die Darstellung eben nicht spalten- und zeilenweise erfolgt.

Bevorzugte Ausführungsbeispiele der vorliegenden Erfindung werden nachfolgend bezugnehmend auf die beiliegenden Zeichnungen näher erläutert. Es zeigen:

Fig. 1    eine schematische Zeichnung einer Projektionsvorrichtung gemäß einem Ausführungsbeispiel der vorliegenden Erfindung;

Fig. 2    einen vorbestimmten Verlauf, den der Lichtstrahl der Projektionsvorrichtung von Fig. 1 auf dem Bildfeld beschreibt, falls das Verhältnis der beiden Ablenkfrequenzen 50:51 beträgt; und

Fig. 3    einen vorbestimmten Verlauf, den der Lichtstrahl der Projektsvorrichtung von Fig. 1 auf dem Bildfeld beschreibt, falls das Verhältnis der beiden Ablenkfrequenzen 70:71 beträgt.

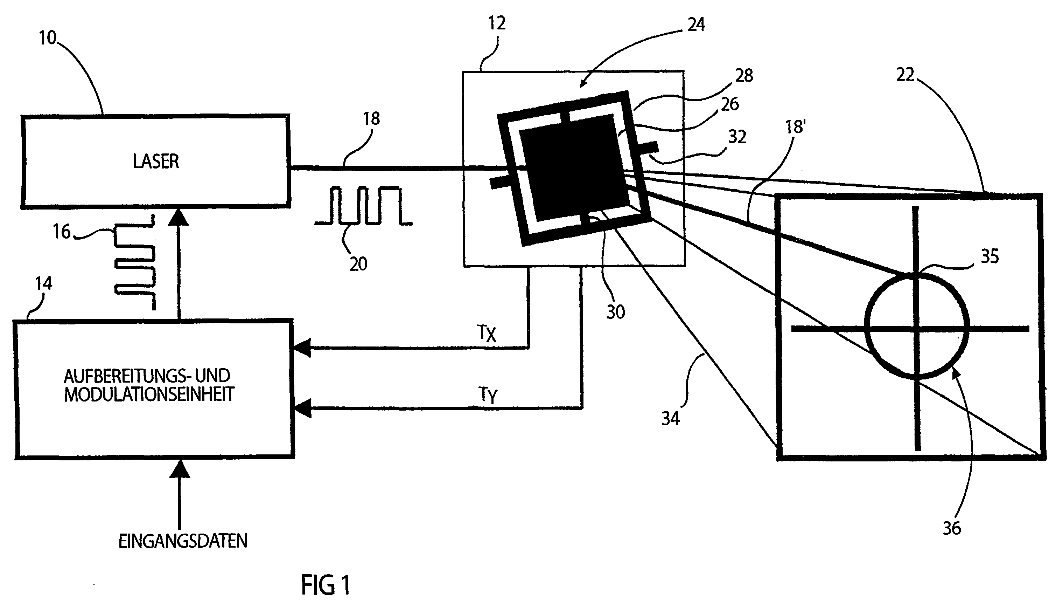

Bezugnehmend auf Fig. 1 wird zunächst der Aufbau einer Projektionsvorrichtung gemäß einem Ausführungsbeispiel der vorliegenden Erfindung beschrieben. Es wird darauf hingewiesen, daß die Darstellung von Fig. 1 zur besseren Verständlichkeit nicht maßstabsgerecht ausgeführt ist. Ferner bezieht sich Fig. 1 auf eine Projektionsvorrichtung zur monochromen Darstellung eines Bildes, obwohl die vorliegende Erfindung ferner auf Projektionsvorrichtungen anwendbar ist, die farbige Darstellungen eines Bildes liefern.

Die Projektionsvorrichtung von Fig. 1 umfaßt einen Laser 10, eine Ablenkeinrichtung 12 und eine Aufbereitungs- und Modulationseinheit 14. Die Aufbereitungs- und Modulationseinheit 14 empfängt an einem Eingang Eingangsbilddaten, die das zu projizierende Bild darstellen, und ist über einen Ausgang mit einem Steuereingang des Lasers 10 verbunden, um an denselben ein digitales Steuersignal 16 zu senden, durch welches die Intensität eines von dem Laser 10 ausgesendeten Laserstrahls 18 moduliert wird, wie es schematisch durch einen dem Verlauf des Steuersignals 16 entsprechenden Intensitätsverlauf 20 dargestellt ist. Der Laserstrahl 18 wird durch die Ablenkeinrichtung 12 auf bzw. in Richtung eines Bildfeldes 22 abgelenkt, wobei die Ablenkeinrichtung eine zweidimensionale Ablenkung des Lichtstrahls 18 ermöglicht. Der abgelenkte Laserstrahl ist mit 18' angezeigt.

Die Ablenkeinrichtung 12 umfaßt in dem vorliegenden Ausführungsbeispiel einen mikromechanisch hergestellten, biaxial aufgehängten Spiegel 24, wobei alternativ jedoch auch zwei mikromechanisch hergestellte, uniaxial aufgehängte Spiegel verwendet werden könnten. Der biaxial aufgehängte Spiegel 24 besteht aus einer rechteckigen Spiegelplatte 26 sowie einem rechteckigen Rahmen 28. Um die biaxiale Aufhängung und damit eine Drehung der Spiegelplatte 26 um zwei Achsen zu ermöglichen, ist die rechteckige Spiegelplatte 26 über eine erste Ablenkachse 30 zentriert an dem Rahmen 28 aufgehängt bzw. drehbar gelagert. Senkrecht zur ersten Ablenkachse 30 ist der Rahmen 28 zentriert an einer zweiten Ablenkachse 32 drehbar gelagert, die senkrecht zur ersten Ablenkachse 30 verläuft. An den Aufhängungen entlang der beiden Ablenkachsen 30 und 32 erfährt der biaxial aufgehängte Spiegel Rückstellkräfte bei Auslenkungen um die Achsen 30 bzw. 32 um eine Ruhelage, weshalb derselbe Eigen- bzw. Resonanzfrequenzen bezüglich der beiden Achsen 30 und 32 aufweist.

Die Ablenkeinrichtung 12 umfaßt ferner eine Ansteuerung (nicht gezeigt), um den biaxial aufgehängten Spiegel 24 in Schwingungen um die Ablenkachsen 30 und 32 zu versetzen, wodurch der Lichtstrahl 18 um die erste Ablenkachse mit einer ersten Ablenkfrequenz $f_1$ und um die zweite Ablenkachse 32 mit einer zweiten Ablenkfrequenz $f_2$ abgelenkt wird. Beide Ablenkfrequenzen $f_1$ und $f_2$ sind auf Frequenzen in der Nähe ihrer Eigenfrequenzen eingestellt und unterscheiden sich lediglich geringfügig. Zudem sind die Ablenkfrequenzen $f_1$ und $f_2$ derart eingestellt, daß sie ein gebrochenrationales Verhältnis aufweisen. Die maximalen Ablenkungen bzw. die Umkehrpunkte der Schwingungen um die beiden Ablenkachsen 30 und 32 definieren ein Raumwinkelsegment 34, innerhalb dessen sich der abgelenkte Strahl 18' bewegt, und das das Bildfeld 22 aufspannt. Aufgrund der Ablenkfrequenzen beschreibt ein durch den abgelenkten Laserstrahl erzeugter Lichtpunkt 35 eine Lissajous-Figur, wie es im folgenden beschrieben werden wird.

Die Ablenkeinrichtung 12 ist über zwei Ausgänge mit zwei weiteren Eingängen der Aufbereitungs- und Modulationseinheit verbunden, um an dieselbe Triggersignale Tx und Ty zu senden, die angeben, wann sich die Schwingung um die erste bzw. zweite Ablenkachse 30 bzw. 32 an ihrem oberen oder unteren Umkehrpunkt befindet. Wie es im folgenden beschrieben werden wird, dienen die Triggersignale Tx und Ty der Synchronisation der Aufbereitungs- und Modulationseinheit 14 mit der Ablenkeinrichtung 12.

Die Ablenkung des Lichtstrahls 18 zusammen mit der Modulation der Intensität des Lichtstrahls 18 ergibt, wie es im folgenden beschrieben wird, ein Bild 36 innerhalb des Bildfeldes 22, wobei in Fig. 1 lediglich exemplarisch als Bild ein Kreuz mit einem Kreis, dessen Mittelpunkt im Kreuzungspunkt des Kreuzes liegt, gezeigt ist.

Nachdem im vorhergehenden der Aufbau der Projektionsvorrichtung von Fig. 1 beschrieben worden ist, wird im folgenden die Funktionsweise derselben bzw. das derselben zugrundeliegende Projektionsverfahren beschrieben.

Im folgenden wird zunächst die Ablenkung des Laserstrahls 18 erläutert, wie sie durch die Ablenkeinrichtung 12 durchgeführt wird. Wie es im vorhergehenden beschrieben wurde, wird der biaxial aufgehängte Spiegel 24 um die Ablenkachsen 32 und 30 in Schwingungen mit den Ablenkfrequenzen f1 bzw. f2 versetzt, die gleich oder ungefähr gleich Resonanzfrequenzen des Spiegels 24 bezüglich der Ablenkachsen 30 und 32 sind. Anders ausgedrückt wird der biaxial aufgehängte Spiegel 24 auf bzw. in der Nähe seiner Resonanzfrequenzen betrieben. Die beiden Ablenkfrequenzen $f_1$ und $f_2$ unterscheiden sich vorzugsweise nur geringfügig, z.B. um weniger als eine Größenordnung. In dem Fall einer hohen Güte der Resonatoren des biaxial aufgehängten Spiegels 24 kann der Zusammenhang zwischen der Zeit einerseits und dem beiden Ablenkwinkeln des Lichtstrahls 18' andererseits in sehr guter Näherung durch eine sinusförmige Funktion beschrieben werden. Um die Ablenkfrequenzen $f_1$ und $f_2$ des biaxial aufgehängten Spiegels 24 konstant zu halten, wird der Ansteuerung der Ablenkeinrichtung 22 beispielsweise ein Referenzspannungssignal von der Aufbereitungs- und Modulationseinheit 14 zugeführt, deren zeitlicher Verlauf dem Sollverlauf des Auslenkwinkels mindestens einer der beiden Schwingungen um die Ablenkachsen 30 und 32 entspricht.

Zusätzlich werden die beiden Ablenkfrequenzen $f_1$ und $f_2$ derart eingestellt, daß sie einen größten gemeinsamen Teiler aufweisen. Der größte gemeinsame Teiler entspricht der Bildwiederholrate $f_r$, d.h. der Rate, mit der der durch den Lichtstrahl 18' erzeugte Lichtpunkt 35 nach einem festen, vorgegebenen Verlauf auf dem Bildfeld 22 wieder die selbe Position erreicht. In dem vorliegenden Fall, da die beiden Schwingungs- bzw. Ablenkachsen 30 und 32 senkrecht zueinander stehen, und für den Fall, daß das Frequenzverhältnis der beiden Ablenkfrequenzen $f_1$ und $f_2$ $f_1:f_2 = n:m$ beträgt, wobei n und m Ganzzahlen sind (d.h. $n,m \in |N$) und die kleinsten gemeinsamen Teiler angeben, gilt für die Bildwiederholrate $f_r$:

$$fr = f_1/n = f_2/m.$$

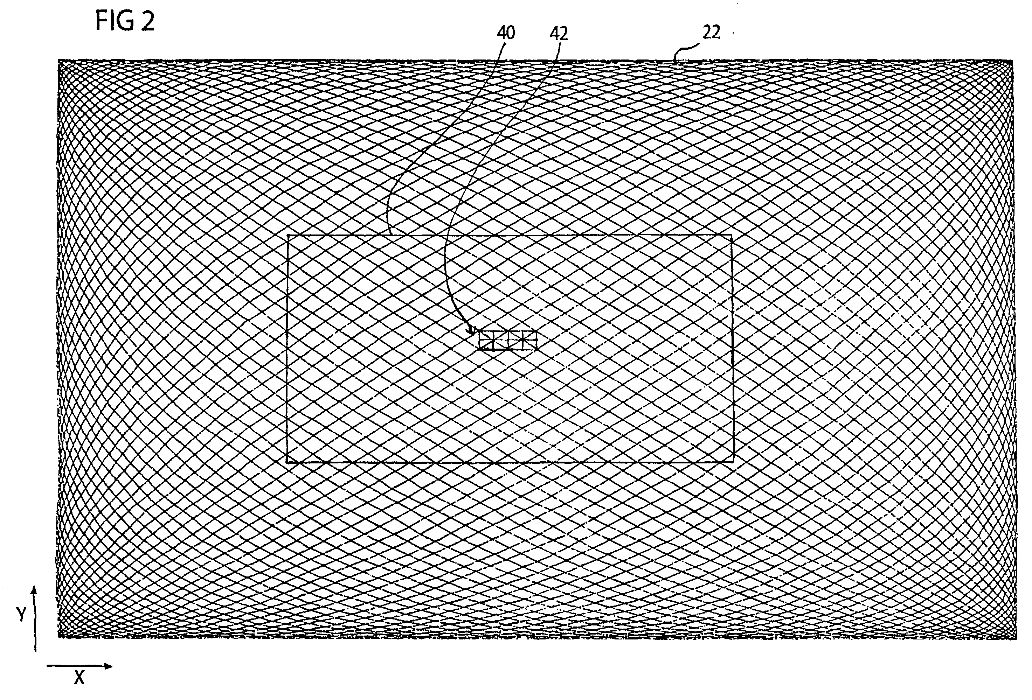

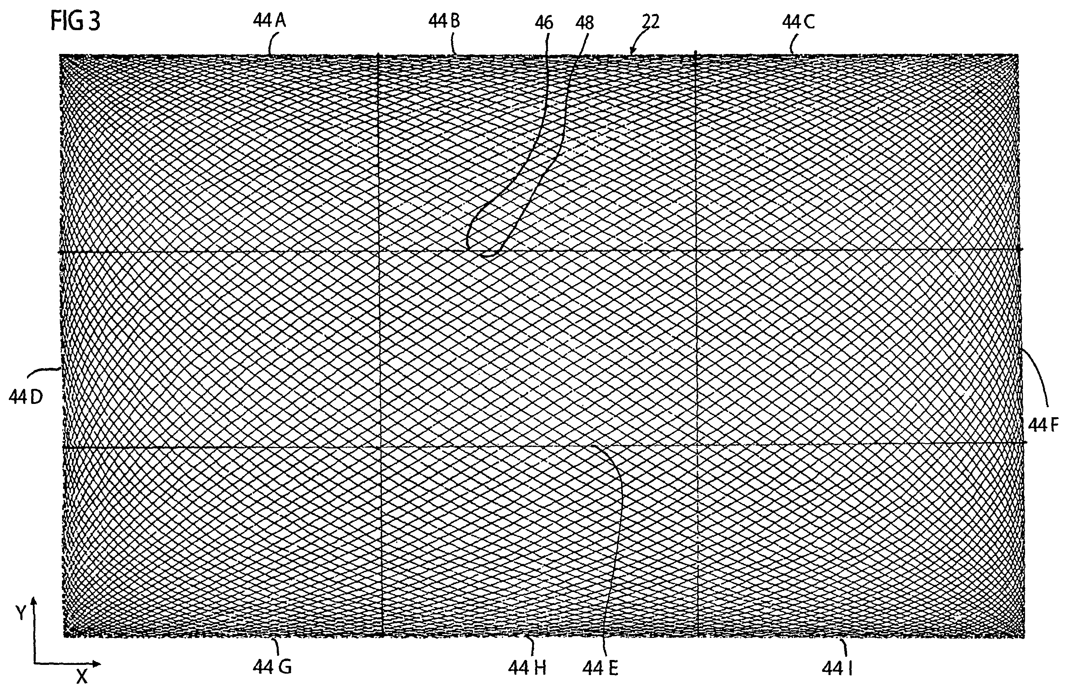

Der durch den abgelenkten Lichtstrahl 18' unter Verwendung der Ablenkfrequenzen $f_1$ und $f_2$ erzeugte Lichtpunkt folgt auf dem Bildfeld 22 im wesentlichen einer Lissajous-Figur, wie sie in den Fig. 2 und 3 für spezielle Frequenzverhältnisse gezeigt ist. Der abgelenkte Lichtstrahl 18' wird durch die Ablenkeinrichtung 12 derart abgelenkt, daß der Lichtstrahl 18' den Verlauf der Lissajous-Figur wiederholt mit der Bildwiederholrate $f_r$ abtastet.

Fig. 2 zeigt die Lissajous-Figur, die der Lichtstrahl 18' auf dem Bildfeld 22 beschreibt, für den Fall, daß das Frequenzverhältnis $f_1:f_2 = 50:51$ beträgt, während Fig. 3 die Lissajous-Figur für das Frequenzverhältnis $f_1:f_2 = 70:71$ darstellt. In beiden Figuren wird angenommen, daß die Ablenkachsen 30 und 32 derart ausgerichtet sind, daß sie parallel zum Bildfeld 22 sind, und daß eine Drehung der Spiegelplatte 26 um die Ablenkachse 30 eine Bewegung des durch den abgelenkten Lichtstrahl 18' erzeugten Lichtpunktes 35 entlang der horizontalen Achse x bewirkt, während eine Auslenkung des biaxial aufgehängten Spiegels 24 um die Ablenkachse 32 eine Bewegung des Lichtpunkts 35 entlang der vertikalen Achse y bewirkt. Dementsprechend befindet sich die Schwingung um die Ablenkachse 30 an einem Umkehrpunkt, falls sich der Lichtpunkt an dem linken oder rechten Rand des Bildfeldes 22 befindet, und die Schwingung um die Ablenkachse 32 befindet sich an einem Umkehrpunkt, falls sich der Lichtpunkt an einem oberen oder unteren Rand des Bildfeldes 22 befindet.

Ordnet man jedem Schnittpunkt der Lissajous-Figur einen Bildpunkt, d.h. einen Punkt auf dem Bildfeld, an dem durch Modulation des Lichtstrahls 18 ein Lichtpunkt 35 mit gewünschter Helligkeit erzeugt werden soll, um zusammen mit anderen Bildpunkten das zu projizierende Bild ergeben, zu und zählt jeden Umkehrpunkt als halben Schnittpunkt, so gilt für die Anzahl N der auf diese Weise definierten Bildpunkte:

$$N = n \times m$$

Nach dieser Definition der Bildpunkte beträgt die Anzahl der Bildpunkte in dem Fall von Fig. 2 50x51 (=2550) während sie in dem Fall von Fig. 3 70x71 (=4970) beträgt.

In dem Fall von Fig. 2 kann eine Bildwiederholrate von 50 Hz erzielt werden, wenn die horizontale Frequenz $f_1$ 2500 Hz und die vertikale Frequenz $f_2$ 2550 Hz beträgt. In dem Fall von Fig. 3 kann eine Bildwiederholrate von 60 Hz erzielt werden, wenn die horizontale Frequenz $f_1$ 4200 Hz und die vertikale Frequenz $f_2$ 4260 Hz beträgt. Allgemein sind Frequenzeinstellungen mit f1 und f2 > 500Hz und n und m größer 10 bevorzugt. n und m können sich aber auch um mehr, beispielsweise um höchstens eine Größenordnung (1/10 < n/m < 10), unterscheiden.

Wie es aus der obigen Gleichung für die Anzahl der Schnitt- bzw. Bildpunkte N hervorgeht, hängt die Abdeckung des Bildfeldes von dem gewählten Frequenzverhältnis zwischen den beiden Ablenkfrequenzen $f_1$ und $f_2$ ab. Wie es ferner aus den beiden Fig. 2 und 3 hervorgeht, ist die Bildpunktdichte bzw. die Schnittpunktdichte der Lissajous-Figur im Randbereich des Bildfeldes 22 größer als im inneren Bereich. Zur Homogenisierung der Bildpunktdichte kann gegebenenfalls der Randbereich des Bildfeldes 22, wie z.B. durch Abschalten der Lichtquelle 10 in diesem Außenbereich, ausgeblendet werden. Exemplarisch ist in Fig. 2 bei 40 ein Fenster angezeigt, außerhalb dessen der Laser 10 abgeschaltet werden kann.

Jeder Punkt entlang der Lissajous-Figur kann durch Modulation der Intensität des Lichtstrahls 18 als Bildpunkt des Bildfeldes 22 dienen. Abweichend von der vorhergehenden Definition der Bildpunkte als die Schnittpunkte und Umkehrpunkte können Bildpunkte beispielsweise diejenigen Punkte der Lissajous-Figur definiert werden, die zwischen benachbarten Schnittpunkten liegen oder die auf der Lissajous-Figur in zeitlich äquidistanter Weise durchlaufen werden oder aber alle Punkte auf der Figur in dem Fall einer andauernden Modulation der Lichtstrahlintensität.

Bei 42 sind in Fig. 2 beispielsweise acht benachbarte Bildpunkte gezeigt, von denen jeder als ein an die benachbarten Bildpunkte angrenzendes Rechteck dargestellt ist. Die Bildpunkte 42 sind derart definiert, daß sie an den Positionen entlang der Lissajous-Figur angeordnet sind, die zwischen benachbarten Schnittpunkten derselben liegen. Jedes einen Bildpunkt darstellende Rechteck weist zwei gegenüberliegende Ecken auf, die auf der Linie der Lissajous-Figur liegen, während die anderen gegenüberliegenden Ecken im wesentlichen zentriert im Zwischenraum zwischen benachbarten Linien der Lissajous-Figur liegen.

Obwohl zur Übersichtlichkeit in Fig. 2 lediglich acht Bildpunkte 42 gezeigt sind, ist erkenntlich, daß eine Erweiterung der solcherart definierten Bildpunkte 42 auf den restlichen Bereich des Bildfeldes 22 ebenfalls eine arraymäßige Anordnung von Bildpunkten ergibt, die im wesentlichen spalten und zeilenweise angeordnet sind, wenngleich sie nach außen hin dichter werden. Anders als bei den in der Beschreibungseinleitung beschriebenen Projektionsverfahren werden die arraymäßig angeordneten Bildpunkte 42 von dem durch den abgelenkten Laserstrahl 18' erzeugten Lichtpunkt 35 jedoch nicht zeilenweise durchlaufen. Vielmehr werden beispielsweise der linke obere Bildpunkt und der Bildpunkt unten rechts neben demselben nacheinander durchlaufen. Folglich werden insbesondere, noch bevor alle vier Bildpunkte der oberen Zeile der acht Bildpunkte 42 durchlaufen werden, Bildpunkte anderer Zeilen durchlaufen.

Nachdem im vorhergehenden die Ablenkung des Lichtstrahls 18 durch die Ablenkeinrichtung 12 sowie die sich hieraus ergebende vorbestimmte und reproduzierbare Bewegung des durch den abgelenkten Lichtstrahls 18' erzeugten Lichtpunktes auf dem Bildfeld 22 beschrieben worden ist, wird im folgenden die Modulation der Intensität des Lichtstrahls 18 beschrieben, um an den Bildpunkten Lichtpunkte mit gewünschter Helligkeit zu erzeugen.

Die Aufbereitungs- und Modulationseinheit 14 ist zu jedem Zeitpunkt in Kenntnis über die augenblickliche Position des durch den abgelenkten Lichtstrahl 18' auf dem Bildfeld erzeugten Lichtpunktes 35. Basierend auf den Eingangsbilddaten steuert die Aufbereitungs- und Modulationseinheit 14 mittels des Steuersignals 16 den Laser 10 derart an, daß sich an dem augenblicklichen Projektionsort, an dem sich der durch den abgelenkten Lichtstrahl 18' erzeugte Lichtpunkt 35 gerade befindet, ein Lichtpunkt mit einer gewünschten Intensität bzw. Helligkeit ergibt, die dem durch die Eingangsbilddaten definierten Bild entspricht.

Um Kenntnis über die augenblickliche Position des Lichtpunktes 35 zu gelangen, berechnet die Aufbereitungs- und Modulationseinheit 14 den momentanen Projektionsort basierend auf einem bekannten Zusammenhang zwischen den Auslenkwinkeln des biaxial aufgehängten Spiegels 24 und der Zeit, der beispielsweise ein sinusförmiger Zusammenhang ist, einerseits und einem bekannten Zusammenhang zwischen den Auslenkwinkeln und den Koordinaten auf dem Bildfeld 22 andererseits. Um die Aufbereitungs- und Modulationseinheit 14 zeitlich mit der Ablenkeinrichtung 12 zu synchronisieren, zeigt die Ablenkeinrichtung 12 der Aufbereitungs- und Modulationseinheit 14 durch die Triggersignale Tx und Ty das Durchlaufen von Umkehrpunkten in der Lissajous-Figur an, wodurch sich der Datenstrom 16 der Aufbereitungs- und Modulationseinheit 14 nach der Ablenkeinrichtung 12 richtet.

Sobald sich der Projektionsort des Lichtpunktes auf dem Bildfeld 22 an einem Bildpunkt, wie z.B. einem der Bildpunkte 42, befindet, gibt die Aufbereitungs- und Modulationseinheit 14 zur Modulation ein entsprechendes Steuersignal 16 an den Laser 10 aus. Entsprechend der vorhergehenden Beschreibung in Hinblick auf die möglichen Definitionen für Bildpunkte bestimmt die Aufbereitungs- und Modulationseinheit 14 das Durchfahren eines Bildpunktes beispielsweise aus einem Vergleich der ermittelten augenblicklichen Position des Lichtpunktes 35 mit den definierten Bildpunkten oder durch wiederholtes Abstoppen einer Zeitdauer in dem Fall zeitlich äquidistanter Bildpunkte. Das Steuersignal 16 kann digital, analog, phasenmoduliert oder dergleichen sein, um die Intensität des Lasers entweder in mehreren Intensitätsabstufungen oder binär und entweder kontinuierlich oder punktuell zu modulieren. Das Steuersignal 16 zur Steuerung der Modulation der Lichtstrahlintensität kann durch Modulation eines Stroms oder einer Spannung realisiert sein.

Den Wert für das Steuersignal 16 zur Einstellung der Intensität des Lichtstrahls 18 bei Erreichen einer Bildposition ermittelt die Aufbereitungs- und Modulationseinheit 14 aus den Eingangsbilddaten, die das zu projizierende Bild darstellen. Die Eingangsbilddaten können beispielsweise in einem Pixelformat oder in Vektorform vorliegen, können aber auch ein spezielles Format aufweisen, das an die Projektionsvorrichtung von Fig. 1 angepaßt ist, wie es nachfolgend beschrieben wird.

Eine erste Möglichkeit zur Bestimmung des Werts für das Steuersignal 16, bei dem die Eingangsbilddaten in jeglichem Format vorliegen können, besteht darin, daß die Aufbereitungs- und Modulationseinheit 14 das durch die Eingangsbilddaten definierte Bild an der der augenblicklichen Lichtpunktposition entsprechenden Position interpoliert. Um die Interpolation durchführen zu können, zwischenspeichert die Aufbereitungs- und Modulationseinheit 14 die Eingangsdaten für jedes Bild vor seiner Projektion. Die Interpolation muß für jeden Bildpunkt nur einmal pro Bild durchgeführt werden, da sich die Steuersignale 16 mit der Bildwiederholrate $f_r$ wiederholen.

In dem Fall, daß das zu projizierende Bild als ein Bitmap, d.h. ein Array von Pixeln, vorliegt, kann das Bildfeld entsprechend der Größe des Bitmaps in Spalten und Zeilen bzw. in Form einer Matrix bzw. eines Arrays aufgeteilt werden, derart, daß das Bildfeld aus spalten- und zeilenweise angeordneten Bildfeldbereichen besteht, von denen jeder einem verschiedenen der Pixel des zu projizierenden Bildes zugeordnet ist. Solange sich der durch den abgelenkten Lichtstrahl 18' erzeugte Lichtpunkt 35 innerhalb eines Matrix- bzw. Bildfeldbereichs befindet bzw. denselben überstreicht, stellt die Aufbereitungs- und Modulationseinheit 14 die Intensität des Lichtstrahls 18 nach dem entsprechenden bzw. diesem Bildfeldbereich zugeordneten Pixelwert des Bitmaps ein. In Fig. 3 ist beispielsweise die Aufteilung des Bildfeldes 22 in Bildfeldbereiche 44a-44i für den stark vereinfachten Fall eines 3x3-Pixelbitmaps dargestellt. Durchquert der abgelenkte Lichtstrahl 18' bzw. sein erzeugter Lichtpunkt 35 einen der Bildpunkte auf der Lissajous-Figur, so wird seine Intensität durch die Aufbereitungs- und Modulationseinheit 14 gemäß demjenigen Pixel in dem Bitmap moduliert, in dessen zugeordnetem Bildfeldbereich 44a-44i sich derselbe befindet. Sind die Bildpunkte beispielsweise als die Schnittpunkte der Lissajous-Figur definiert, so wird die Intensität an allen Schnittpunkten gemäß dem Pixelwert eingestellt, in dessen zugeordneten Bildfeldbereich 44a-44i sich dieselben befinden. Für einen Schnittpunkt 46 wird die Intensität beispielsweise auf den Wert des Pixels eingestellt, der dem Bildfeldbereich 44b entspricht. Wird die Modulation kontinuierlich durchgeführt, bzw. sind alle Punkte der Lissajous-Figur Bildpunkte, so hält die Aufbereitungs- und Modulationseinheit 14 die Intensität solange konstant auf den Wert desjenigen Pixels, in dessen Bildfeldbereich 44a-44i sich der Lichtpunkt gerade befindet, solange der Lichtpunkt 35 diesen Bildfeldbereich durchquert. Die Anzahl von Bildpunkten pro Pixel kann über das Bildfeld 22 variieren. Aufgrund der erhöhten Dichte in Randbereich existieren dort mehr Bildpunkte pro Pixel. Da der Verlauf der Lichtpunktes 35 auf dem Bildfeld 22 fest und im voraus bekannt ist (ebenso wie die. Aufteilung des Bildfeld in Bildfeldbereiche 44a-44i), kann die Aufbereitungs- und Modulationseinheit 14 die erhöhte Anzahl an Bildpunkten für ein Pixel durch Reduzieren der Intensität für die Bildpunkte dieses Pixels berücksichtigen.

Es wird darauf hingewiesen, daß im Unterschied zu herkömmlichen scannenden Bildprojektionsverfahren zunächst Pixel unterschiedlicher Zeilen geschrieben bzw. die Bildfeldbereiche unterschiedlicher Zeilen abgetastet werden, bevor die Pixel bzw. die Bildfeldbereiche einer vollständigen Zeile des Bildes geschrieben bzw. abgetastet werden. Nach dem Bildpunkt 46 erreicht der Lichtstrahl 18' beispielsweise zunächst einen Bildpunkt 48, der jedoch in einer anderen Zeile liegt. Die anderen Bildfeldbereiche 44a und 44c der oberen Zeile erreicht der Lichtstrahl erst später wieder.

Ein Spezialfall liegt vor, falls die Eingangsbilddaten im Pixelformat bzw. als ein Array von Pixelwerten vorliegen, d.h. die Bildpunkte in einem vorzugsweise zwei- oder eindimensionalen Feld angeordnet sind, und die Anzahl der Zeilen und Spalten der Bildpunkte der Anzahl der Zeilen und Spalten der Pixelwerte entspricht. In diesem Fall kann es ausreichend sein, wenn die Aufbereitungs- und Modulationseinheit 14 die Eingangsbilddaten eines Bildes umsortiert, um der Reihenfolge zu entsprechen, in der die Bildpunkte auf der Lissajous-Figur von dem Lichtpunkt 35 abgetastet werden. Dies liegt darin begründet, daß der Verlauf der Lissajous-Figur im vorhinein bekannt ist, und damit gleichzeitig im vorhinein bekannt ist, in welcher Reihenfolge der Lichtpunkt die Bildpunkte des Fensters 40 durchläuft. Die Aufbereitungs- und Modulationseinheit 14 muß dann lediglich die umsortierten Werte der Reihe nach jeweils bei Erreichen aufeinanderfolgender Bildpunkte verwenden, um aus denselben die Steuersignale 16 für den Laser 10 zu erzeugen. Eine Interpolation ist in diesem Fall nicht notwendig. Um eine Verzeichnung aufgrund der erhöhten Dichte der Bildpunkte im Randbereich des Bildfelds 22 zu vermeiden, kann beispielsweise der Randbereich des Bildfeldes 22 ausgeblendet werden, um eine gleichmäßige Anordnung von Bildpunkten ohne Verzeichnungen zu erzielen. In Fig. 2 können die Bildpunkte des Fensters 40 beispielsweise wie die Bildpunkte 42 von Fig. 2 definiert sein, wobei jedem Bildpunkt des Fensters 40 ein Pixelwert der Eingangsdaten zugewiesen wird. Die auftretende Verzeichnung am Rand könnte beispielsweise auch durch zwischen der Ablenkeinrichtung 12 und dem Bildfeld 22 angeordnete geeignete Linsen korrigiert werden. Erleichtert wird die Umordnung bzw. Umsortierung aufgrund der Tatsache, daß die Umsortierung für jedes Eingangsbild mit gleichem Pixelformat gleich ist, so daß eine feste Abbildungsvorschrift zur Umordnung des Eingangsdatenstromes in ein dem Steuersignal 16 entsprechenden Ausgangsstrom verwendet werden kann.

Es ist jedoch ferner möglich, daß die Eingangsbilddaten der Aufbereitungs- und Modulationseinheit 16 in der Reihenfolge zugeführt werden, in der die Bildpunkte abgetastet werden, so daß in diesem Fall keine Aufbereitung durch die Aufbereitungs- und Modulationseinheit 16 erforderlich wäre.

Um für verschiedene Formate der Eingangsbilddaten geeignet zu sein, kann die Aufbereitungs- und Modulationseinheit 16 abhängig von einem Anfangsblock der Eingangsbilddaten die Modulation der Lichtstrahlintensität selektiv auf eine der im vorhergehenden beschriebenen Weisen durchführen.

Die im vorhergehenden bezugnehmend auf die Fig. 1 beschriebene Projektionsvorrichtung kann als ein miniaturisierter Low-Cost-Lichtprojektor zur Darstellung von Bildern, Mustern, Schriftzeichen oder Symbolen verwendet werden, wie er beispielsweise zur visuellen Darstellung von Filmen, text- oder bild-basierten Informationen oder Graphiken verwendet werden kann. Bei der Verwendung geeigneter Lichtleistung und eines photoempfindlichen Materials kann der Projektor außerdem zur Generation eines Abbildes in dieses Material verwendet werden. Möglich wären Anwendungen bei tragbaren Computern, Terminals, Handys bzw. Mobiltelefonen, Beschriftungssystemen oder in Head-Up-Anzeigen.

Ein Vorteil der Projektionsvorrichtung von Fig. 1 besteht darin, daß, da sich die beiden zur Ablenkung des Lichtstrahls verwendeten Frequenzen nur geringfügig, wie z.B. um weniger als eine Größenordnung, unterscheiden, die Ablenkfrequenzen auf der einen Seite derart gering gehalten werden können, daß die dynamische Deformation die Bildqualität nicht beeinträchtigt, auf der anderen Seite aber dennoch groß genug sind, um eine ausreichende mechanische Stabilität sicherzustellen. Der Zusammenhang zwischen Zeit und Ablenkwinkel bzw. Projektionsort ist für beide Ablenkrichtungen deutlich nicht linear. Insbesondere kann der Zusammenhang zwischen Zeit und Ablenkwinkel bei hoher Güte der Resonatoren in sehr guter Näherung durch eine sinusförmige Funktion beschrieben werden. Im Vergleich zum nichtresonanten Betrieb, wie er für einen linearen Zusammenhang zwischen Zeit und Ablenkwinkel bzw. Projektionsort benötigt wird und wie er bei den in der Beschreibungseinleitung beschriebenen Systemen verwendet wird, ist eine entsprechend der Güte des oszillierenden Spiegels bzw. der oszillierenden Spiegel geringere Leistungsaufnahme notwendig, so daß auch die Ansteuerung stark miniaturisiert werden kann, die beispielsweise als gedruckte Schaltungsplatine (PCB) mit Oberflächenbefestigungsbauelementen (SMD) oder als integrierte Schaltung (IC) zur Verfügung gestellt werden kann. Da sich die Ablenkfrequenzen nur geringfügig unterscheiden, wird das Bild nicht spalten- und zeilenförmig erzeugt, wie dies bei den herkömmlichen Systemen der Fall ist. Im Gegensatz zu klassischen Interlace-Verfahren, bei denen aufgrund der abwechselnden Darstellung von geradzahligen und ungeradzahligen Zeilen ein Wackeln des Bildes in vertikaler Richtung auftritt, wird ein solches Wackeln bei der Projektionsvorrichtung von Fig. 1 durch das Abdecken des Bildfeldes gemäß einer Lissajous-Figur vermieden. Folglich wird durch die Projektionsvorrichtung von Fig. 1 ein für das Auge deutlich ruhigeres Bild erzeugt.

Obwohl im vorhergehenden die Aufbereitungs- und Modulationseinheit den augenblicklichen Projektionsort basierend auf Taktsignalen unter Verwendung des Zusammenhangs zwischen den momentanen Ablenkwinkeln des Lichtstrahls und der Zeit bestimmt hat, ist es ferner möglich, daß die Ablenkeinheit der Aufbereitungs- und Modulationseinheit Signale zuführt, die Informationen über die augenblickliche Position bzw. Ausrichtung des Ablenkspiegels, wie z.B. die augenblicklichen Ablenkwinkel des Lichtstrahls oder die augenblicklichen Auslenkungswinkel des Spiegels, enthalten, so daß die Bestimmung basierend auf diesen Informationen durchgeführt werden kann.

In Hinblick auf mögliche Alternativen der Vorrichtung von Fig. 1 wird darauf hingewiesen, daß, obwohl im vorhergehenden eine Ablenkeinrichtung 12 mit einem biaxial aufgehängten Spiegel beschrieben worden ist, dieselbe ferner zwei uniaxial aufgehängte Spiegel, wie z.B. zwei uniaxial aufgehängte mikromechanisch gefertigte Spiegel, die um zwei senkrecht zueinander stehende Achsen drehbar gelagert sind, umfassen kann. Die zwei beweglichen, beispielsweise mikromechanisch hergestellten Spiegel sind derart angeordnet, daß der auf die Spiegel treffende Lichtstrahl zweidimensional abgelenkt werden kann. Grundsätzlich könnte die Ablenkeinrichtung jedoch auch eine geeignete Anordnung von strahlbeugenden Elementen oder eine Kombination derselben mit Spiegeln aufweisen.

Ferner kann, obwohl als Lichtquelle im vorhergehenden ein Laser beschrieben worden ist, ferner eine Laserdiode oder eine andere geeignete Lichtquelle verwendet werden. Ebenfalls ist es möglich, daß ein extern erzeugtes Licht über eine Glasfaser oder eine andere geeignete Einrichtung zur Ablenkeinheit geführt wird, so daß die Projektionsvorrichtung selbst keine Lichtquelle aufweist.

Die Modulation des Steuersignals bzw. die Intensitätsmodulation der Lichtquelle kann abweichend von der vorhergehenden Beschreibung durch ein weiteres Element, einem sogenannten Modulator, durchgeführt werden, so daß Modulation der Lichtquellenintensität und Aufbereitung der Bilddaten in verschiedenen Elmenten ausgeführt werden. Die Aufbereitung muß, wie es im vorhergehenden erwähnt wurde, nicht im Projektor durchgeführt werden, sondern es kann ferner vorgesehen sein, daß die Bilddaten bereits in einem geeigneten Format vorliegen.

Ferner ist die vorliegende Erfindung nicht nur auf monochrome Projektoren anwendbar, sondern außerdem zur farbigen Darstellung bzw. Projektion geeignet. Es können beispielsweise mehrere Lichtquellen vorgesehen sein, wie z.B. verschiedene Laser, deren Strahlen beispielsweise durch einen Strahlteiler zusammengeführt werden und auf die Ablenkeinrichtung gerichtet werden.

In einer Realisierung der Projektionsvorrichtung von Fig. 1 können wesentliche Elemente der Schaltung der Modulationseinheit bzw. Modulationseinrichtung als eine gedruckte Schaltungsplatine (PCB = printed circuit board) mit diskreten Bauelementen, wie z.B. SMD- (SMD = surface mounted device) Bauelementen, oder als eine IC (IC = integrated circuit = integrierte Schaltung) realisiert sein.

**Patentansprüche**

1. Projektionsvorrichtung zum Projizieren eines Bildes (36) auf ein Bildfeld (22), mit folgenden Merkmalen:

   einer Ablenkeinrichtung (12) zum Ablenken eines Lichtstrahls (18) um eine erste Ablenkachse (30) und um eine zweite Ablenkachse (32), um den Lichtstrahl (18) über das Bildfeld (22) zu bewegen; und

   einer Modulationseinrichtung (14) zum Modulieren einer Intensität des Lichtstrahls (18) abhängig von dem zu projizierenden Bild und dem augenblicklichen Projektionsort des Lichtpunktes auf dem Bildfeld, wobei sich die erste und die zweiten Ablenkfrequenz um weniger als eine Größenordnung unterscheiden,

   **dadurch gekennzeichnet, daß**
   die Ablenkeinrichtung (12) derart ausgebildet ist, daß der Lichtstrahl (18) um die erste Ablenkachse (30) mit einer ersten Ablenkfrequenz $f_1$ und um die zweite Ablenkachse (32) mit einer zweiten Ablenkfrequenz $f_2$ abgelenkt wird, wobei die Ablenkeinrichtung (12) Mittel aufweist, die das Frequenzverhältnis auf $f_1:f_2 = n:m$, mit m und n ungleichen Ganzzahlen, einstellt, so daß der Lichtstrahl (18) auf dem Bildfeld (22) eine Lissajous-Figur beschreibt und dieselbe mit einer Wiederholfrequenz $f_r$ von $f_r = f_1/n = f_2/m$ wiederholt durchläuft.

2. Projektionsvorrichtung gemäß Anspruch 1, bei der die Ablenkeinrichtung (12) eine erste Resonanzfrequenz bezüglich der Ablenkung um die erste Ablenkachse (30) und eine zweite Resonanzfrequenz bezüglich der Ablenkung um die zweite Ablenkachse (32) aufweist, und bei der die erste Ablenkfrequenz in der Nähe der ersten Resonanzfrequenz und die zweite Ablenkfrequenz in der Nähe der zweiten Resonanzfrequenz liegt.

3. Projektionsvorrichtung gemäß Anspruch 1 oder 2, bei der die erste und die zweite Ablenkfrequenz (30, 32) größer 500 Hz und n und m größer 10 sind.

4. Projektionsvorrichtung gemäß einem der Ansprüche 1 bis 3, bei der die Differenz zwischen n und m 1 beträgt.

5. Projektionsvorrichtung gemäß einem der Ansprüche 1 bis 4, bei der das zu projizierende Bild (36) durch Pixel definiert ist, die als Array in Spalten und Zeilen angeordnet sind, wobei jedem Pixel ein Bildbereich (44a-44i) auf dem Bildfeld (22) zugeordnet ist, und wobei die Ablenkeinrichtung (12) den Lichtstrahl (18) derart ablenkt, daß der Lichtstrahl (18) Bildbereiche (44a-44i) unterschiedlicher Zeilen auf dem Bildfeld (22) durchquert, bevor derselbe alle Bildbereiche (44a-44i) einer vollständigen Zeile erreicht hat.

6. Projektionsvorrichtung gemäß Anspruch 5, bei dem die Modulationseinrichtung (14) angepaßt ist, um die Intensität des Lichtstrahls (18) abhängig davon, in welchem der Bildbereiche (44a-44i) sich ein momentaner Projektionsort des Lichtstrahls (18) in dem Bildfeld (22) befindet, und gemäß dem Pixel, dem das Bildfeld (44a-44i) zugeordnet ist, in dem sich der momentane Projektionsort des Lichtstrahls (18) befindet, zu modulieren.

7. Projektionsvorrichtung gemäß einem der Ansprüche 1 bis 6, bei der die Ablenkeinrichtung (12) folgendes Merkmal aufweist:

   eine Einrichtung zum Ausblenden der Lichtquelle (10), sobald der Lichtstrahl (18) durch die Ablenkeinrichtung (12) in einen Randbereich des Bildfeldes (22) abgelenkt wird.

8. Projektionsvorrichtung gemäß einem der Ansprüche 1 bis 7, bei dem die Modulationseinrichtung (14) die Modulation der Intensität des Lichtstrahls (18) basierend auf einem momentanen Projektionsort des Lichtstrahls (18) auf dem Bildfeld (22) und Bilddaten, die das Bild definieren, durchführt.

9. Projektionsvorrichtung gemäß Anspruch 8, bei dem die Modulationseinrichtung (14) folgendes Merkmal aufweist:

   eine Einrichtung zum Bestimmen des momentanen Projektionsorts basierend auf entweder einem momentanen ersten und zweiten Ablenkwinkel des Lichtstrahls (18) oder basierend auf einem Zeitsignal ($T_x$, $T_y$) unter Verwendung eines vorbestimmten Zusammenhangs zwischen dem ersten und zweiten momentanen Ablenkwinkel des Lichtstrahls (18) und der Zeit.

**10.** Projektionsvorrichtung gemäß einem der vorhergehenden Ansprüche, bei der die Ablenkeinrichtung (12) folgendes Merkmal aufweist:

eine Synchronisationseinrichtung zum Senden des Zeitsignals ($T_x$, $T_y$) zu der Modulationseinrichtung (14) zur Synchronisation der Modulationseinrichtung (14) mit der Ablenkeinrichtung (12), wobei das Zeitsignal Umkehrpunkte bei den Ablenkungen des Lichtstrahls durch die Ablenkeinrichtung (12) angibt.

**11.** Projektionsvorrichtung gemäß einem der vorhergehenden Ansprüche, bei der die Ablenkeinrichtung (12) angeordnet ist, um Informationen über den ersten und zweiten momentanen Ablenkwinkel zu der Modulationseinrichtung (14) zu senden.

**12.** Projektionsvorrichtung gemäß einem der vorhergehenden Ansprüche, bei der die Modulationseinrichtung (14) angeordnet ist, um eine Referenzspannung zu der Ablenkeinrichtung (12) zuzuführen, die einen zeitlichen Verlauf aufweist, der einem zeitlichen Sollverlauf zumindest eines ersten oder eines zweiten momentanen Ablenkwinkels des Lichtstrahls (18) entspricht.

**13.** Projektionsvorrichtung gemäß einem der Ansprüche 1 bis 11, bei der die Ablenkeinrichtung (12) angeordnet ist, um ein Triggersignal zu der Modulationseinrichtung (14) zu senden.

**14.** Projektionsvorrichtung gemäß einem der Ansprüche 1 bis 13, die ferner folgendes Merkmal aufweist:

eine Aufbereitungseinrichtung (14) zum Ändern einer Reihenfolge von Pixlwerten in einem Eingangsdatenstrom, der das Bild definiert, und zum Zuführen eines Steuersignals (16) zu der Modulationseinrichtung (10), das dem Eingangsdatenstrom in geänderter Reihenfolge entspricht.

**15.** Projektionsvorrichtung gemäß einem der Ansprüche 1 bis 14, die ferner folgendes Merkmal aufweist:

einer Aufbereitungseinrichtung zum Interpolieren des Bildes (36) an Positionen, die Bildpunkten (42) des Bildfeldes (22) entsprechenden, um Interpolationswerte zu erhalten, wobei die Modulationseinrichtung (14) angepaßt ist, um die Modulation an den Bildpunkten basierend auf den Interpolationswerten durchzuführen.

**16.** Projektionsvorrichtung gemäß einem der Ansprüche 1 bis 15, bei der die Ablenkeinrichtung (12) entweder einen biaxial aufgehängten bewegbaren Spiegel oder zwei uniaxial aufgehängte bewegbare Spiegel umfaßt.

**17.** Projektionsvorrichtung gemäß einem der Ansprüche 1 bis 16, die ferner eine Lichtquelle (10) zum Erzeugen des Lichtstrahls aufweist.

**18.** Projektionsvorrichtung gemäß einem der vorhergehenden Ansprüche, wobei die Projektionsvorrichtung eine miniaturisierte Projektionsvorrichtung ist, bei der die Ablenkeinrichtung (12) einen biaxial aufgehängten oder zwei uniaxial aufgehängte Spiegel aufweist, die mikromechanisch hergestellt sind.

**19.** Verfahren zum Projizieren eines Bildes (36) auf ein Bildfeld (22), mit folgenden Merkmalen:

Ablenken eines Lichtstrahls (18) um eine erste Ablenkachse (30) und um eine zweite Ablenkachse (32), um den Lichtstrahl (18) über das Bildfeld (22) zu bewegen; und

Modulieren einer Intensität des Lichtstrahls (18) abhängig von dem zu projizierenden Bild, wobei sich die erste und die zweiten Ablenkfrequenz um weniger als eine Größenordnung unterscheiden,

**dadurch gekennzeichnet, daß**
der Schritt des Ablenkens derart durchgeführt wird, dass der Lichtstrahl (18) um die erste Ablenkachse (30) mit einer ersten Ablenkfrequenz $f_1$ und um die zweite Ablenkachse (32) mit einer zweiten Ablenkfrequenz $f_2$, für die für ungleiche Ganzzahlen n und m $f_1$:$f_2$ = n:m gilt, abgelenkt wird, so daß der Lichtstrahl (18) auf dem Bildfeld (22) eine Lissajous-Figur beschreibt und dieselbe mit einer Widerholfrequenz $f_r$ von $f_r = f_1/n = f_2/m$ wiederholt durchläuft.

**Claims**

**1.** Projection apparatus for projecting an image (36) on an image field (22), comprising:

a deflection means (12) for deflecting a light beam (18) about a first deflection axis (30) and about a second deflection axis (32) in order to move the light beam (18) across the image field (22); and

a modulation means (14) for modulating an intensity of the light beam (18) depending on the image to be projected and the instantaneous projection place of the light spot on the image field, wherein the first and second deflection frequencies differ by less than an order of magnitude,

**characterized in that**
the deflection means (12) is formed such that the light beam (18) is deflected about the first deflection axis (30) at a first deflection frequency $f_1$ and about the second deflection axis (32) at a second deflection frequency $f_2$, wherein the deflection means (12) comprises means adjusting the frequency ratio to $f_1:f_2 = n:m$, with m and n being unequal integers, so that the light beam (18) describes a Lissajous figure on the image field (22) and repeatedly passes through it with a repetition frequency $f_r$ of $f_r = f_1/n = f_2/m$.

2. Projection apparatus of claim 1, wherein the deflection means (12) has a first resonance frequency with reference to the deflection about the first deflection axis (30) and a second resonance frequency with reference to the deflection about the second deflection axis (32), and wherein the first deflection frequency lies in the vicinity of the first resonance frequency and the second deflection frequency in the vicinity of the second resonance frequency.

3. Projection apparatus of claim 1 or 2, wherein the first and second deflection frequencies (30, 32) are greater than 500 Hz and n and m are greater than 10.

4. Projection apparatus of one of claims 1 to 3, wherein the difference between n and m is 1.

5. Projection apparatus of one of claims 1 to 4, wherein the image (36) to be projected is defined by pixels arranged as an array in columns and rows, wherein each pixel is associated with an image area (44a-44i) on the image field (22), and wherein the deflection means (12) deflects the light beam (18) such that the light beam (18) crosses through image areas (44a-44i) of different rows on the image field (22) before it has reached all image areas (44a-44i) of a complete row.

6. Projection apparatus of claim 5, wherein the modulation means (14) is adapted to modulate the intensity of the light beam (18) depending on in which of the image areas (44a-44i) a momentary projection place of the light beam (18) in the image field (22) is and according to the pixel associated with the image field (44a-44i) in which the momentary projection place of the light beam (18) is.

7. Projection apparatus of one of claims 1 to 6, wherein the deflection means (12) comprises:

   a means for fading out the light source (10) as soon as the light beam (18) is deflected in a margin area of the image field (22) by the deflection means (12).

8. Projection apparatus of one of claims 1 to 7, wherein the modulation means (14) performs the modulation of the intensity of the light beam (18) based on a momentary projection place of the light beam (18) on the image field (22) and image data defining the image.

9. Projection apparatus of claim 8, wherein the modulation means (14) comprises:

   a means for determining the momentary projection place based on either a momentary first and second deflection angle of the light beam (18) or based on a time signal ($T_x$, $T_y$) using a predetermined connection between the first and second momentary deflection angles of the light beam (18) and the time.

10. Projection apparatus of one of the preceding claims, wherein the deflection means (12) comprises:

    a synchronization means for sending the time signal ($T_x$, $T_y$) to the modulation means (14) for the synchronization of the modulation means (14) with the deflection means (12), wherein the time signal indicates reversal points in the deflections of the light beam by the deflection means (12).

11. Projection apparatus of one of the preceding claims, wherein the deflection means (12) is arranged to send information about the first and second momentary deflection angles to the modulation means (14).

12. Projection apparatus of one of the preceding claims, wherein the modulation means (14) is arranged to feed a reference voltage to the deflection means (12), which has a progress in time corresponding to a target progress in time of at least a first or a second momentary deflection angle of the light beam (18).

13. Projection apparatus of one of claims 1 to 11, wherein the deflection means (12) is arranged to send a trigger signal to the modulation means (14).

14. Projection apparatus of one of claims 1 to 13, further comprising:

    a rendition means (14) for changing an order of pixel values in an input data stream defining the image and for feeding a control signal (16) to the modulation means (10), which corresponds to the input data stream in changed order.

15. Projection apparatus of one of claims 1 to 14, further comprising:

a rendition means for interpolating the image (36) at positions corresponding to image points (42) of the image field (22), in order to obtain interpolation values, wherein the modulation means (14) is adapted to perform the modulation on the image points based on the interpolation values.

16. Projection apparatus of one of claims 1 to 15, wherein the deflection means (12) includes either one biaxially suspended movable mirror or two uniaxially suspended movable mirrors.

17. Projection apparatus of one of claims 1 to 16, which further comprises a light source (10) for creating the light beam.

18. Projection apparatus of one of the preceding claims, wherein the projection apparatus is a miniaturized projection apparatus in which the deflection means (12) comprises one biaxially suspended or two uniaxially suspended mirrors that are micromechanically manufactured.

19. Method for projecting an image (36) on an image field (22), comprising:

deflecting a light beam (18) about a first deflection axis (30) and about a second deflection axis (32), in order to move the light beam (18) across the image field (22); and

modulating an intensity of the light beam (18) depending on the image to be projected, wherein the first and second deflection frequencies differ by less than an order of magnitude,

**characterized in that**
the step of deflecting is performed such that the light beam (18) is deflected about the first deflection axis (30) at a first deflection frequency $f_1$ and about the second deflection axis (32) at a second deflection frequency $f_2$, for which $f_1:f_2 = n:m$ applies for unequal integers n and m, so that the light beam (18) describes a Lissajous figure on the image field (22) and repeatedly passes through it with a repetition frequency $f_r$ of $f_r = f_1/n = f_2/m$.

**Revendications**

1. Dispositif de projection destiné à projeter une image (36) sur un champ image (22), aux caractéristiques suivantes :

un dispositif de déflexion (12) destiné à défléchir un faisceau lumineux (18) autour d'un premier axe de déflexion (30) et autour d'un deuxième axe de déflexion (32), pour déplacer le faisceau lumineux (18) dans le champ image (22) ; et
un dispositif de modulation (14) destiné à moduler une intensité du faisceau lumineux (18) en fonction de l'image à projeter et de l'endroit de projection momentané du point lumineux sur le champ image, la première et la deuxième fréquence de déflexion différant l'une de l'autre de moins d'un ordre de grandeur,

**caractérisé par le fait que**
le dispositif de déflexion (12) est réalisé de sorte que le faisceau lumineux (18) soit défléchi autour du premier axe de déflexion (30) avec une première fréquence de déflexion $f_1$ et autour du deuxième axe de déflexion (32) avec une deuxième fréquence de déflexion $f_2$, le dispositif de déflexion (12) présentant des moyens qui règlent le rapport de fréquence $f_1:f_2 = n:m$, m et n étant des nombres entiers différents, de sorte que le faisceau lumineux (18) décrive sur le champ image (22) une figure de Lissajous et parcoure celle-ci de manière répétée à une fréquence de répétition $f_r$ de $f_r = f_1/n = f_2/m$.

2. Dispositif de projection selon la revendication 1, dans lequel le dispositif de déflexion (12) présente une première fréquence de résonance en ce qui concerne la déflexion autour du premier axe de déflexion (30) et une deuxième fréquence de résonance en ce qui concerne la déflexion autour du deuxième axe de déflexion (32), et dans lequel la première fréquence de déflexion se situe au voisinage de la première fréquence de résonance et la deuxième fréquence de déflexion se situe au voisinage de la deuxième fréquence de résonance.

3. Dispositif de projection selon la revendication 1 ou 2, dans lequel la première et la deuxième fréquence de déflexion (30, 32) sont supérieures à 500 Hz et n et m sont supérieurs à 10.

4. Dispositif de projection selon l'une des revendications 1 à 3, dans lequel la différence entre n et m est de 1.

5. Dispositif de projection selon l'une des revendications 1 à 4, dans lequel l'image à projeter (36) est définie par des pixels qui sont disposés sous forme de rangée en colonnes et lignes, à chaque pixel étant associée une zone d'image (44a à 44i) sur le champ image (22), et le dispositif de déflexion (12) défléchissant le faisceau lumineux (18) de sorte que le faisceau lumineux (18) traverse des zones d'image (44a à 44i) de différentes lignes sur le champ image (22), avant qu'il n'ait atteint toutes les zones d'image (44a à 44i) d'une ligne complète.

6. Dispositif de projection selon la revendication 5, dans lequel le dispositif de modulation (14) est adapté pour moduler l'intensité du faisceau lumineux (18) en fonction de la zone d'image (44a à 44i) dans laquelle se situe un endroit de projection momentané du faisceau lumineux (18) dans le champ image (22), et selon le pixel auquel est associé le champ image (44a à 44i) dans lequel se situe l'endroit de projection momentané du faisceau lumineux (18).

7. Dispositif de projection selon l'une des revendications 1 à les 6, dans lequel le dispositif de déflexion (12) présente la caractéristique suivante :

   un dispositif destiné à fondre au noir la source de lumière (10) dès que le faisceau lumineux (18) est défléchi par le dispositif de déflexion (12) dans une zone de bordure du champ image (22).

8. Dispositif de projection selon l'une des revendications 1 à 7, dans lequel le dispositif de modulation (14) effectue la modulation de l'intensité du faisceau lumineux (18) sur base d'un endroit de projection momentané du faisceau lumineux (18) sur le champ image (22) et de données d'image qui définissent l'image.

9. Dispositif de projection selon la revendication 8, dans lequel le dispositif de modulation (14) présente la caractéristique suivante :

   un dispositif destiné à déterminer l'endroit de projection momentané sur base soit d'un premier et d'un deuxième angle de déflexion momentané du faisceau lumineux (18) ou sur base d'un signal de temps ($T_x$, $T_y$) à l'aide d'une relation prédéterminée entre le premier et le deuxième angle de déflexion momentané du faisceau lumineux (18) et le temps.

10. Dispositif de projection selon l'une des revendications précédentes, dans lequel le dispositif de déflexion (12) présente la caractéristique suivante :

    un dispositif de synchronisation destiné à transmettre le signal de temps ($T_x$, $T_y$) au dispositif de modulation (14) pour synchroniser le dispositif de modulation (14) avec le dispositif de déflexion (12), le signal de temps indiquant des points d'inversion pour les déflexions du faisceau lumineux par le dispositif de déflexion (12).

11. Dispositif de projection selon l'une des revendications précédentes, dans lequel le dispositif de déflexion (12) est disposé de manière à transmettre des informations sur le premier et le deuxième angle de déflexion momentané au dispositif de modulation (14).

12. Dispositif de projection selon l'une des revendications précédentes, dans lequel le dispositif de modulation (14) est disposé de manière à alimenter une tension de référence au dispositif de déflexion (12) qui présente une évolution dans le temps qui correspond à une évolution de consigne dans le temps d'au moins un premier ou un deuxième angle de déflexion momentané du faisceau lumineux (18).

13. Dispositif de projection selon l'une des revendications 1 à 11, dans lequel le dispositif de déflexion (12) est disposé de manière à transmettre un signal de déclenchement au dispositif de modulation (14).

14. Dispositif de projection selon l'une des revendication 1 à 13, présentant, par ailleurs, la caractéristique suivante :

    un dispositif de préparation (14) destiné à changer un ordre de valeurs de pixel dans un flux de données d'entrée qui définit l'image et à alimenter un signal de commande (16) vers le dispositif de modulation (10) qui correspond au flux de données d'entrée dans l'ordre changé.

15. Dispositif de projection selon l'une des revendications 1 à 14, présentant, par ailleurs, la caractéristique suivante :

    un dispositif de préparation destiné à interpoler l'image (36) en des positions qui correspondent à des points d'image (42) du champ image (22), pour obtenir des valeurs d'interpolation, le dispositif de modulation (14) étant adapté pour effectuer la modulation aux points d'image sur base des valeurs d'interpolation.

16. Dispositif de projection selon l'une des revendications 1 à 15, dans lequel le dispositif de déflexion (12) comporte soit un miroir mobile suspendu dans deux directions, soit deux miroirs mobiles suspendus dans une direction.

17. Dispositif de projection selon l'une des revendications 1 à 16, présentant, par ailleurs, une source de lumière (10) destinée à générer le faisceau lumineux.

18. Dispositif de projection selon l'une des revendications précédentes, le dispositif de projection étant un dispositif de projection miniaturisé, dans lequel le dispositif de déflexion (12) présente un miroir suspendu dans deux directions ou deux miroirs suspendus dans une direction qui sont réalisés par des procédés micromécaniques.

**19.** Procédé de projection d'une image (36) sur un champ image (22), aux caractéristiques suivantes :

défléchir un faisceau lumineux (18) autour d'un premier axe de déflexion (30) et autour d'un deuxième axe de déflexion (32), pour déplacer le faisceau lumineux (18) dans le champ image (22) ; et

moduler une intensité du faisceau lumineux (18) en fonction de l'image à projeter, la première et la deuxième fréquence de déflexion différant l'une de l'autre de moins d'un ordre de grandeur,

**caractérisé par le fait que**

l'étape de déflexion est effectuée de sorte que le faisceau lumineux (18) soit défléchi autour du premier axe de déflexion (30) avec une première fréquence de déflexion $f_1$ et autour du deuxième axe de déflexion (32) avec une deuxième fréquence de déflexion $f_2$, pour lesquelles, pour des nombres entiers n et m différents, est d'application $f_1{:}f_2 = n{:}m$, de sorte que le faisceau lumineux (18) décrive sur le champ image (22) une figure de Lissajous et parcoure celle-ci de manière répétée avec une fréquence de répétition $f_r$ de $f_r = f_1/n = f_2/m$.

FIG 1

LASER 10

18

20

16

14

AUFBEREITUNGS- UND
MODULATIONSEINHEIT

EINGANGSDATEN

12

24

28

26

32

30

18'

22

TX

TY

34

35

36

EP 1 419 411 B1

FIG 2

EP 1 419 411 B1

FIG 3